Europäisches Patentamt

European Patent Office

Office européen des brevets

(19)

(11) Numéro de publication : **0 238 588 B1**

(12) **FASCICULE DE BREVET EUROPÉEN**

(45) Date de publication du fascicule du brevet :
09.08.89

(51) Int. Cl.⁴ : **B 64 C 27/10, B 64 C 27/12, B 64 C 27/20**

(21) Numéro de dépôt : 86905846.1

(22) Date de dépôt : 26.09.86

(86) Numéro de dépôt international :
PCT/FR 86/00330

(87) Numéro de publication internationale :
WO/8702004 (09.04.87 Gazette 87/08)

(54) AERONEF A AILES TOURNANTES.

(30) Priorité : 27.09.85 FR 8514320

(43) Date de publication de la demande :
30.09.87 Bulletin 87/40

(45) Mention de la délivrance du brevet :
09.08.89 Bulletin 89/32

(84) Etats contractants désignés :
AT BE CH DE FR GB IT LI LU NL SE

(56) Documents cités :
DE—A— 2 530 185
FR—A— 1 331 306
FR—A— 2 293 361
US—A— 2 461 348
US—A— 2 466 821
Aviasport, no. 385, June 1986, Les Pavillons-sous-Bois (FR) "Le mobycoptère", page 52

(73) Titulaire : SOLINHAC, Bernard
11bis, Avenue Carnot
F-75017 Paris (FR)

(72) Inventeur : SOLINHAC, Bernard
11bis, Avenue Carnot
F-75017 Paris (FR)

(74) Mandataire : Tony-Durand, Serge
Cabinet Tony-Durand 77, rue Boissière
F-75116 Paris (FR)

Jouve, 18, rue St-Denis, 75001 Paris, France

## Description

La présente invention concerne un aéronef à ailes tournantes, présentant une structure très légère et particulièrement simple, autorisant notamment quoique non exclusivement son usage comme machine dite « ULM » (Ultra Léger Motorisé).

On connaît déjà des réalisations d'appareils volants à décollage et atterrissage verticaux, en particulier du type à ailes ou voilures rotatives, bien connus sous les noms d'hélicoptère ou d'autogire. Mais ces appareils présentent, dans leur conception et leur principe généraux de fonctionnement, des inconvénients, dûs notamment à l'utilisation d'un rotor entraînant les pales de sustentation dont le mécanisme d'entraînement et de commande de pas, c'est-à-dire de variation de l'incidence des pales, est lourd et coûteux, et exige une maintenance délicate. De plus, les pales du rotor servent usuellement à sustenter une cabine ou un habitacle dans lequel se placent le pilote et/ou les passagers de l'engin, et qui fait obstacle à écoulement de l'air balayé par ces pales. Enfin, le rendement en vol de tels engins est médiocre, ce qui entraîne une consommation de carburant élevé, ces appareils présentant en outre un prix d'achat et d'entretien généralement prohibitifs pour une utilisation individuelle.

Cependant le brevet FR-A-1.331.306 décrit un aéronef à ailes tournantes spécialement destiné à un usage individuel. Cet aéronef comporte, autour de la position de la tête de l'utilisateur, deux couronnes parallèles animées de mouvements de rotation identiques mais de sens inverse autour d'un axe commun, et supportant chacune au moins une paire de pales d'ailes ou voilures diamétralement opposées et disposées dans le prolongement l'une de l'autre. Les couronnes rotatives ainsi prévues sont montées sur un support dont une partie entoure la tête de l'utilisateur, cependant qu'une autre partie, disposée contre le dos de celui-ci, porte le moteur d'entraînement. Ce support est lui-même porté par l'utilisateur sur lequel il est fixé directement au moyen d'un harnachement constitué par des sangles entourant le corps de celui-ci. En conséquence, un tel aéronef est très peu pratique et son utilisation est extrêmement inconfortable et dangereuse.

Dans une variante de réalisation (figure 6), les couronnes rotatives, portant les pales de sustentation sont disposées au niveau du bassin de l'utilisateur, mais les inconvénients restent des mêmes. Dans une autre variante moins dangereuse (figure 9), il est prévu une cabine destinée à recevoir l'utilisateur. Mais dans un tel cas les couronnes rotatives, portant les pales de sustentation, sont à nouveau disposées autour de l'emplacement de la tête de l'utilisateur.

De plus, quelque soit la forme de réalisation prévue, un tel aéronef est un peu aisé à piloter, surtout pour les personnes auxquelles un tel engin est susceptible de s'adresser, c'est-à-dire des personnes n'ayant que des connaissances succinctes de vol et de navigation.

C'est pourquoi la présente invention a pour objet un aéronef à ailes tournantes qui évite ces inconvénients, en permettant par ailleurs sa manœuvre par un utilisateur ne disposant que de connaissances succintes de vol et de navigation. A cet effet, cet aéronef est conçu de façon que son assiette puisse être modifiée de façon extrêmement simple. De plus l'agencement de cet appareil lui permet de décoller et atterrir sans nécessiter aucune plateforme aménagée ou autre structure analogue, seul étant nécessaire un espace libre propre à permettre la libre rotation des pales de l'engin. Celui-ci présente par ailleurs une faible consommation, n'exige qu'un entretien limité et peut être réalisé pour un prix d'achat très modeste. L'appareil selon l'invention ne nécessite pas en outre de matériaux de construction coûteux, pouvant au contraire utiliser des matériaux classiques, disponibles dans le commerce tel que du bois, des alliages légers, des plastiques. Il se prête enfin à des variantes nombreuses à partir d'une même conception de base, commune à chacune d'elles.

A cet effet, l'invention a pour objet un aéronef à ailes tournantes, comportant, autour de l'emplacement de l'utilisateur, deux couronnes parallèles animées de mouvements de rotation identiques mais de sens inverse autour d'un axe commun, et supportant chacune au moins une paire de pales d'ailes ou voilures diamétralement opposées et disposées dans le prolongement l'une de l'autre, caractérisé en ce que ces deux couronnes rotatives sont portées par une nacelle portant un siège destiné à recevoir l'utilisateur en position assise de façon que celui-ci se trouve entouré par ces couronnes rotatives, et ce siège est monté coulissant dans le plan médian de la nacelle, sensiblement dans le sens normal de déplacement en vol de l'appareil, et en ce qu'il est par ailleurs prévu des moyens aptes à faire varier, dans chaque paire de pales, le pas de celles-ci de façon égale mais opposée pour chacune d'elles.

Ainsi l'appareil selon l'invention est aménagé de telle sorte que le centre de gravité de celui-ci, disposé entre les deux couronnes puisse permettre à son utilisateur un pilotage aisé, l'assiette de l'appareil pouvant notamment être modifiée à volonté par le simple déplacement de l'utilisateur lui-même sur son siège, monté coulissant par rapport à la nacelle, en créant en vol un effort de poussée sur l'ensemble assurant la propulsion de l'engin consécutivement à une inclinaison vers l'avant des pales des ailes tournantes ou, au contraire, en cas de déplacement du siège vers l'arrière, une modification opposée de l'assiette et un effet de freinage de l'aéronef du fait de l'inclinaison inverse des pales.

Avantageusement, la nacelle comporte des moyens d'appui au sol de l'aéronef, assurant au repos la stabilité de celui-ci. De préférence, ces moyens sont constitués par une structure de support rigide, prolongeant la nacelle et comportant des patins, roulettes ou analogues.

Selon une caractéristique particulière de l'invention, les moyens d'entraînement des couronnes comportent au moins une roue motrice, entraînée en rotation autour d'un axe parallèle au plan des couronnes, supporté par la nacelle et disposé à égale distance de l'une et de l'autre, la périphérie de la roue portant contre la face en regard de chaque couronne de telle sorte que la rotation de cette roue entraîne, à la même vitesse mais en sens inverse, l'une et l'autre des deux couronnes parallèles.

Avantageusement, la roue motrice comporte un pneumatique de roulement réalisé en caoutchouc et assure l'entraînement des couronnes par friction sur ces dernières. L'axe de la roue motrice traverse librement un bloc de support solidarisé de la nacelle et est relié par l'intermédiaire d'un mécanisme à roue libre, à un volant sur lequel passe une courroie d'entraînement, actionnée par une poulie elle-même entraînée, à travers un embrayage centrifuge, par l'arbre de sortie d'un moteur à explosion.

Selon une autre caractéristique particulière, la liaison entre le moteur à explosion et l'embrayage centrifuge est réalisé par un joint élastique, apte à tolérer de légers désalignements entre l'arbre de sortie de ce moteur et de l'embrayage. De préférence, le moteur à explosion est porté par la nacelle au moyen de colliers d'attache ou analogues et d'écrous de blocage, permettant d'ajuster au montage sa position relative sur la nacelle.

Dans la disposition précédente, la roue motrice frotte directement sur les couronnes. Toutefois et selon une autre variante de réalisation, la roue motrice peut être constituée par une roue dentée en prise, à la façon d'un engrenage, avec une piste crantée souple prévue sur chacune des faces en regard des deux couronnes entraînées par cette roue.

Avantageusement, chaque couronne est portée par la nacelle au moyen d'une pluralité de jeu de galets, répartis circonférentiellement autour de cette couronne, chaque jeu pouvant comporter trois galets montés rotatifs autour d'axes fixés à la nacelle et appliqués pour d'eux d'entre eux respectivement sur l'une et l'autre des faces de la couronne d'une part et pour le troisième contre le bord intérieur de celle-ci opposé aux pales d'autre part.

Afin de permettre la variation permanente ou prédéterminée du pas des pales, des ailes ou voilures associées aux couronnes rotatives, chacune de ces dernières comporte, au droit de chaque pale, un doigt axial de support de celle-ci, muni d'une butée à aiguilles et sur lequel est engagé un manchon propre à pivoter autour du doigt, ce manchon étant prolongé par une chape entre les deux bras de laquelle est montée et fixée l'extrémité de la pale de manière à autoriser, par rotation relative du manchon, la variation du pas de la pale vis-à-vis de la couronne.

De préférence, chaque pale de la voilure comporte deux extensions transversales disposées dans le prolongement l'une de l'autre, les pales d'une même paire étant réunies, autour de la nacelle, par deux câbles croisés tendus, fixés en bout de ces extensions respectivement aux extrémités opposées de celles-ci, de telle sorte qu'un effort de traction dans un sens sur un des câbles se traduise par un effort de traction inverse sur l'autre câble et vice-versa, les deux pales de la même paire pivotant ainsi autour de leurs doigts axiaux de support avec une amplitude de rotation égale et opposée. De préférence également, la tension des câbles assurant le pivotement relatif des pales est ajustée par un ensemble de ridoirs ou tendeurs analogues, associés aux extensions de support. En outre et selon une caractéristique subsidiaire de l'invention, de commande de position des deux câbles croisés déterminant le pas des pales est réalisée au moyen de dispositifs électro-magnétique à deux positions ou par l'intermédiaire soit d'un moto-réducteur, soit d'un moteur pas à pas, assurant l'entraînement mutuel en sens inverse de ces câbles.

Comme déjà indiqué, le déplacement de l'aéronef peut être réalisé, dans une première variante simplifiée d'exécution, en faisant varier l'assiette de l'appareil, notamment par déplacement de son centre de gravité grâce au coulissement du siège sur lequel est assis l'utilisateur. Dans une autre variante de réalisation, la nacelle porte, à l'opposé de la roue motrice d'entraînement des couronnes, une roue auxiliaire librement entraînée par le mouvement de ces couronnes, l'axe de la roue auxiliaire étant de préférence disposé dans le plan médian de la nacelle à l'opposé de celui de la route motrice, la roue auxiliaire comportant un jeu d'ailettes radiales orientables, propres à créer une composante d'avancement de l'aéronef selon la direction de ce plan médian.

Dans la variante ci-dessus, la roue auxiliaire est de préférence montée à l'opposé de la roue motrice d'entraînement des couronnes ce qui permet notamment et en combinaison avec les autres moyens de guidage et de commande de l'appareil d'assurer le contrôle en vol de l'aéronef, en évitant en particulier son glissement et en maintenant le calage rigoureux à 180° des pales des ailes tournantes lorsque ces dernières comportent chacune une paire de pales opposée.

Afin de permettre dans la première variante évoquée ci-dessus, le coulissement du siège de l'utilisateur par rapport à la nacelle, ce siège est monté coulissant sur au moins une barre de support, disposée sensiblement au voisinage de la couronne inférieure et s'étendant parallèlement au plan médian, la position du siège étant ajustée par l'utilisateur par la réaction d'un effort exercé par celui-ci sur des calepieds ou appuis analogues disposés sur la nacelle de part et d'autre de ce plan et éventuellement sur un guidon.

Le cas échéant, le siège coulissant peut comporter un contre-poids déquilibrage, afin de compenser le poids d'un utilisateur trop léger, notamment lorsque ce dernier est inférieur à 60 kilos par exemple.

Selon d'autres caractéristiques subsidiaires de l'aéronef selon l'invention, qui peuvent être avantageusement mises en œuvre quelle que soit la variante de réalisation retenue pour assurer le déplacement en vol de l'appareil, la nacelle supporte au moins un et de préférence deux réservoirs de carburant, disposés entre les couronnes de part et d'autre du plan médian de la nacelle. En variante, le siège coulissant peut comporter un dossier dans l'épaisseur duquel est placé un réservoir principal ou complémentaire de carburant.

De même et conformément à une autre disposition avantageuse de l'invention, la nacelle supporte de part et d'autre du plan médian des dérives ou ailerons latéraux, orientables, de manière à faciliter les évolutions latérales de l'aéronef. En outre, la nacelle est munie, à proximité des mains de l'utilisateur, des organes de commande du moteur, des ailerons et des câbles de réglage du pas des pales, ainsi que des moyens permettant d'assurer les évolutions en vol de l'appareil.

Ainsi et selon une autre caractéristique, chacune des deux couronnes portées par la nacelle, comporte au moins un frein propre à être actionné par l'utilisateur à l'aide d'un palonnier pour ralentir cette couronne dans sa rotation et créer un couple de décalage entre les deux couronnes, en provoquant une réaction sur l'aéronef, notamment pour produire le déplacement en virage de celui-ci ou en vol stationnaire.

Enfin, on prévoit avantageusement dans la transmission du mouvement du moteur vers la roue motrice d'entraînement des couronnes, un moyen de détection de l'arrêt du moteur de manière à commander le débrayage automatique de ce dernier et la mise en autorotation immédiate des pales des ailes portées par les couronnes pour une libre sustentation de l'aéronef, jusqu'à se qu'il se pose au sol sous l'effet de la composante descendante due à son poids par autorotation.

Grâce à la mise en œuvre des dispositions énoncées ci-dessus, l'aéronef à ailes tournantes de l'invention permet de façon très simple la commande de ses évolutions dans toutes les directions, soit en vol stationnaire, soit en vol normal sans trajectoire de virage ou avec virage ou lacet, celle-ci étant obtenue soit par l'action des freins agissant latéralement sur la couronne supérieure, soit par les ailerons latéraux, soit par l'effet combiné de ces deux éléments. Dans tous les cas, la commande initiale de la valeur du pas collectif des pales puis en vol, la commande dynamique de la variation cyclique du pas de ces pales portées par les couronnes, réalisée par les câbles croisés associés à chaque paire de pales de la voiture, permet d'assurer une stabilité parfaite de l'appareil. En outre les pales de chaque aile étant fixée sur un manchon rotatif, il est ainsi possible de rendre automatiquement cette pale porteuse sur toute sa surface, le flux balayé par les ailes n'étant en outre pas perturbé par l'obstacle que constitue la nacelle de l'appareil au fait du montage des couronnes autour et à l'extérieur de celle-ci. Il en résulte un rendement sustentateur très notablement amélioré pour une surface de voiture donnée.

D'autres avantages et caractéristiques d'un aéronef à ailes tournantes établi conformément à l'invention apparaîtront encore à travers la description qui suit de divers exemples de réalisation, donnés à titre indicatif et non limitatif, en référence aux dessins annexés sur lequels :

La figure 1 est une vue schématique en coupe transversale de l'aéronef à ailes tournantes selon l'invention, par un plan médian selon lequel s'effectue en vol rectiligne, le déplacement de l'appareil.

La figure 2 est une vue de face de l'aéronef de la figure 1.

La figure 3 est une vue de dessus de l'aéronef selon les figures 1 et 2.

La figure 4 est une vue de détail, en coupe, à plus grande échelle, illustrant les moyens mis en œuvre pour assurer le support des pales des ailes tournantes, en permettant notamment le réglage du pas de la voiture ainsi constituée.

La figure 5 illustre dans une variante de réalisation, la structure d'une roue auxiliaire, permettant de créer sur l'appareil en vol, une composante de déplacement, notamment dans le plan médian de l'appareil.

La figure 6 est une vue en coupe d'un autre détail de réalisation, permettant de créer un couple de déphasage entre les deux coronnes d'entraînement des ailes tournantes.

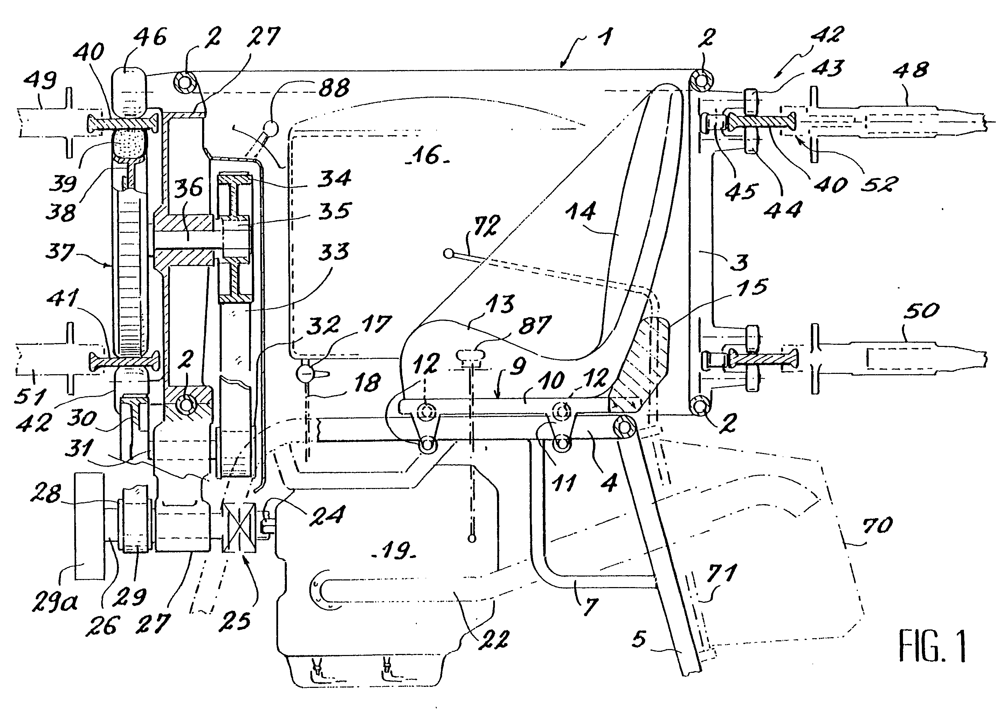

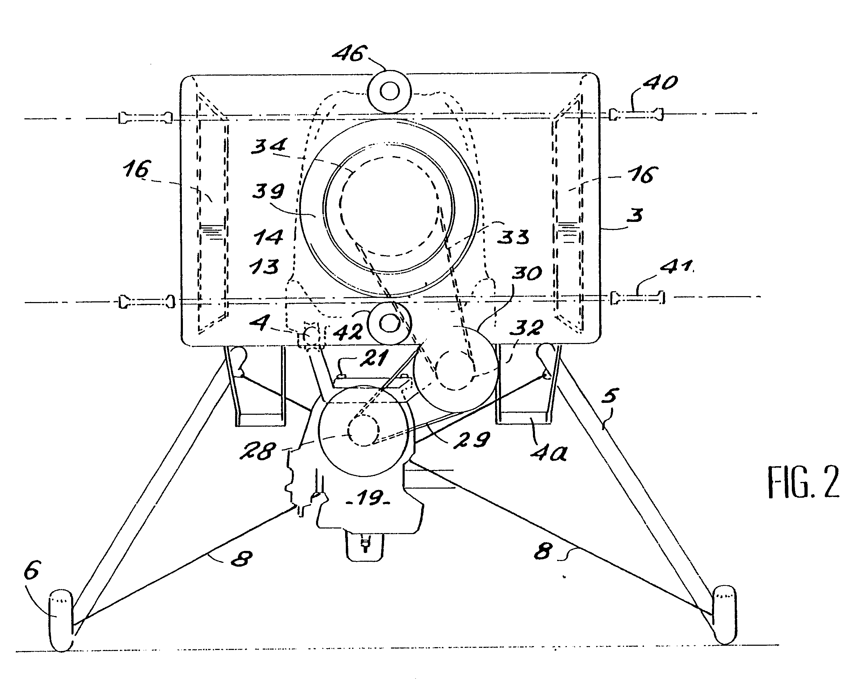

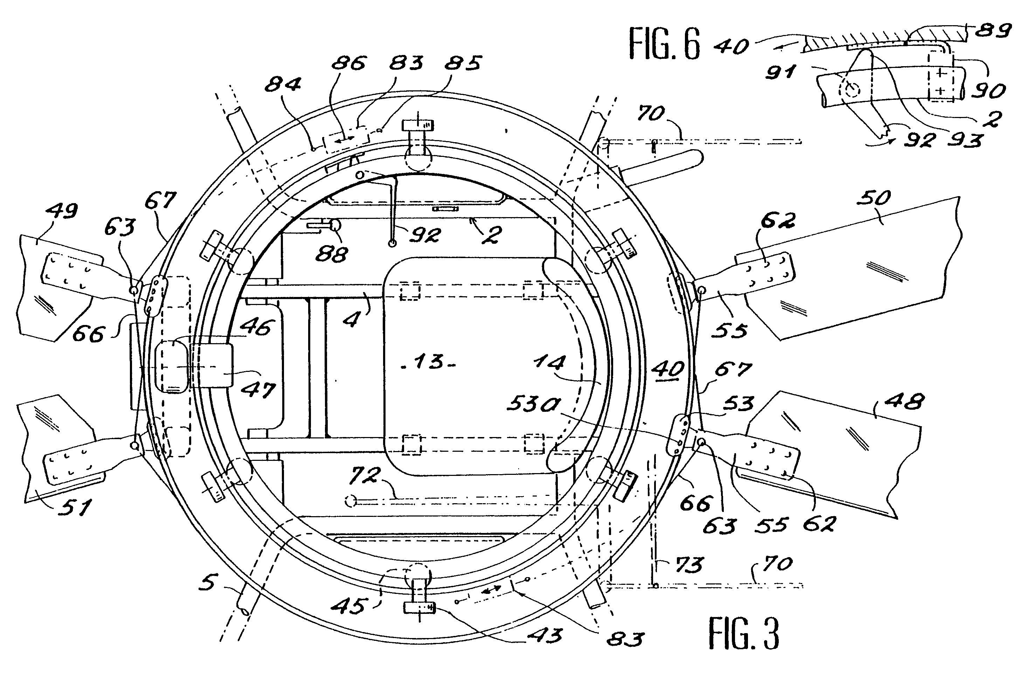

Comme on le voit notamment sur les figures 1 à 3, l'aéronef considéré comporte principalement une nacelle 1 de forme générale cylindrique, avantageusement constituée au moyen d'éléments tubulaires cintrés tels que 2, disposés horizontalement et reliés par une paroi latérale 3. Les tubes 2 et la paroi 3 sont réalisés en tout matériau léger approprié, par exemple métallique ou comportant des parties en matières plastiques, éventuellement du bois. A la partie inférieure de la nacelle 1 sont disposés, de part et d'autre du plan médian de celle-ci qui correspond au plan de coupe de la figure 1, deux longerons 4 (figure 3), constituant un support de coulissement pour un siège 9 sur lequel s'assoie l'utilisateur ou pilote de l'appareil. Les longerons 4 sont solidarisés de la nacelle proprement dite pour constituer avec celle-ci un ensemble rigide, se prolongeant par quatre jambes d'appui 5 au sol terminées par des patins ou analogues. Le cas échéant, les patins 6 pourraient être remplacés par des roulettes ou par tout autre moyen de support classique pour ce genre d'appareil. Des membrures de raidissement 7, permettent aux jambes 5 de la nacelle de résister aux efforts créés par le poids de l'appareil lorsqu'il repose sur le sol ; de même les câbles croisés 8 peuvent être tendus entre ces jambes pour parfaire la rigidité de l'ensemble.

Le siège 9 monté dans la nacelle à la partie basse de celle-ci, comporte une plaque d'assise 10 sous laquelle s'étendent des chapes de guidage 11 portant des galets 12 de manière à permettre au siège de glisser aisément sur les longerons 4, en modifiant dans ces conditions, la positon du centre de gravité de l'appareil une fois le pilote assis sur ce siège. Celui-ci comporte une partie inférieure 13 sur laquelle prend place l'utilisateur, cette partie 13 étant prolongée par un dossier 14. Avantageusement le siège 9 présente un profil en forme de baquet et est muni de moyens de sécurité usuelle (ceinture, sangle ou attache à ouverture rapide), permettant au pilote d'être confortablement assis sur le siège en faisant corps avec celui-ci, notamment afin de lui permettre par un effort exercé au moyen de ses pieds sur des appuis 4a solidaire de la nacelle 1 éventuellement sur un guidon (non représenté), de déplacer à volonté le siège sur ses longerons 4, en réglant ainsi la position correspondante de celui-ci dans le plan médian de l'appareil et en déployant le centre de gravité de l'engin. Un contre poids 15 peut être également prévu derrière le siège 9 afin de compléter l'équipement de celui-ci, notamment lorsque le pilote présente une faible corpulence, telle que son déplacement avec le siège ne provoque pas une variation du centre de gravité suffisante pour faire varier ou corriger l'assiette de l'appareil ainsi qu'il sera expliqué plus loin. Bien entendu, un tel contre-poids devra être évité autant que possible si le poids de l'utilisateur est convenable, l'appareil selon l'invention devant être réalisé de la façon la plus légère possible, en supprimant tout accessoire non indispensable dont le poids propre pénalise l'ensemble.

La nacelle 1 comporte avantageusement, de part et d'autre du siège 9, deux réservoirs de carburant 16, comprenant chacun à son extrémité inférieure, un robinet d'ouverture 17 et une conduite d'alimentaion 18 reliée à un moteur à explosion 19 porté par la nacelle et fournissant l'énergie nécessaire à l'élévation et à la propulsion de l'appareil. En variante, la réserve de carburant pourrait être disposée dans l'épaisseur de la nacelle elle-même, voire sous le siège ou dans le dossier de ce dernier, en disposant alors naturellement autour du réservoir des moyens de protection adéquats du pilote.

Le moteur 19 est fixé sous la nacelle 1 au moyen d'une barre d'attache 20 supportant ce moteur par l'intermédiaire de brides ou colliers (non représentés) et de boulons et de blocage 21. De préférence, le moteur 19 est un moteur à essence à deux temps, comportant de façon classique une tubulure latérale d'échappement des gaz 22 et un pôt 23 dont la sortie est dirigée vers l'arrière de l'appareil. Le moteur 19 entraîne un arbre de sortie 24, relié par un dispositif de connexion souple du genre « Silentbloc » ou analogue, à un premier arbre de transmission 26, le dispositif 25 permettant notamment de tolérer les légers désalignements éventuels des arbres 24 et 26 en fonctionnement. L'arbre de transmission 26 tourillonne sur des paliers (non représentés) montés dans un bloc porteur 27, monté à l'avant de la nacelle et comporte une poulie de renvoi de mouvement 28, entraînant par l'intermédiaire d'une courroie 29, une seconde poulie intermédiaire 30. L'axe 26 entraîne également un embrayage centrifuge 29a, schématisé sur le dessin et dont le détail de réalisation importe peu en lui-même à l'invention.

Le mouvement de rotation de la poulie intermédiaire 30 reçu de la façon exposée ci-dessus de l'arbre 24 du moteur 19, est renvoyé par un arbre 31 porté par le bloc 27 jusqu'à une troisième poulie 32, entraînant à son tour par une seconde courroie le renvoi 33 une roue à inertie 34. Cette dernière est rendue solidaire d'un arbre de transmission final 36 par l'intermédiaire d'un mécanisme à roue libre 35, dont le rôle sera précisé plus loin. Bien entendu, il est clair que la réalisation pratique du mécanisme d'entraînement de l'arbre 36 à partir du moteur 19 pourrait subir de nombreuses variantes, selon la position relative de ces organes, le couple à transmettre et l'encombrement disponible. A l'extrémité de l'arbre 36 est enfin montée une roue motrice 37 comportant, dans sa version la plus simple, une jante centrale 38 et à sa périphérie un pneumatique 39. Ce dernier frotte, conformément à une caractéristique essentielle de l'invention, sur deux couronnes parallèles identiques, respectivement 40 et 41, disposées concentriquement à l'axe de la nacelle 1 dans des plans horizontaux superposés lorsque la nacelle est en appui au sol, ces couronnes situées en conséquence à égale distance de l'arbre de transmission 36 étant ainsi entraînées en sens inverse l'une de l'autre et à la même vitesse, puisque ces couronnes présentent le même diamètre. Chacune des couronnes 40 et 41 est supportée vis-à-vis de la nacelle 1, au moyen d'organes porteurs 42, comportant chacun dans l'exemple considéré, trois galets montés fous sur leurs axes respectifs, deux de ces galets 43 et 44 portant contre les faces supérieure et inférieure de la couronne considérée, tandis que le troisième galet 45 roule sur le bord interne de cette même couronne. Ces organes porteurs 42 sont répartis autour de l'axe vertical de la nacelle au droit de chacune des couronnes 40 et 41, en nombre approprié, pouvant aller de trois à huit selon le cas. Un dispositif 46 pour l'enregistrement de la vitesse des couronnes est également prévu, en étant de préférence placé à l'avant de la nacelle dans le plan médian de l'appareil sous les yeux du pilote assis sur le siège 9, ce dispositif 46 étant par exemple constitué par une roulette tachymétrique qui relève ainsi la vitesse de rotation instantanée de la couronne 40 et transmet sa mesure à un cadran de lecture 47 fixé sur le tube supérieur 2.

Chaque couronne 40 et 41 supporte au moins une paire de pales, constituant deux à deux une aile ou voilure tournante de l'appareil, les deux pales (éventuellement quatre pales) associées à la couronne supérieure 40 étant repérées sur les dessins sur les références 48 et 49, les deux pales de la couronne inférieure 41 portant les références 50 et 51.

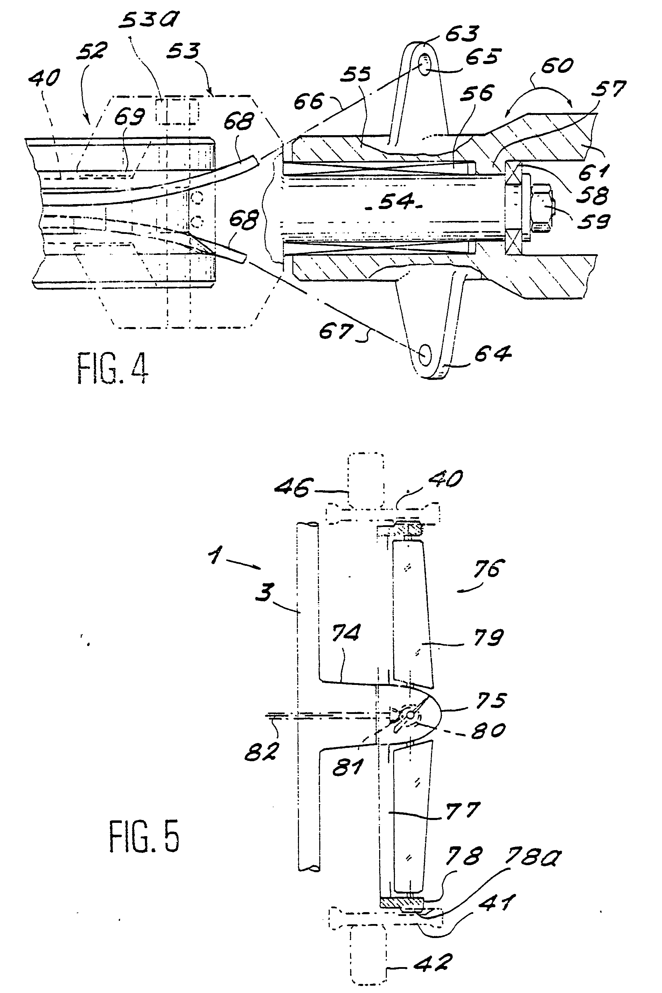

La liaison entre chacune des pales et la couronne correspondante est réalisée selon l'invention au moyen d'un dispositif de fixation particulier 52 solidarisé du bord de la couronne opposé à celui contre lequel porte les galets 45. Ce dispositif comporte notamment une pièce 53, immobilisée sur la couronne par des vis de fixation 53a, et se prolonge, comme on le voit plus précisément sur la vue de détail de la figure 4, par un doigt radial 54. Sur celui-ci s'engage un manchon intermédiaire 55, pouvant tourner autour du doigt 54 grâce au montage entre celui-ci et le manchon d'un roulement 56. Le manchon 55 présente par ailleurs un rebord interne 57 sur lequel est appliqué une butée à aiguilles 58, l'ensemble étant immobilisé axialement par un écrou de blocage 59. Grâce au roulement 56 et à la butée 58, le manchon 55 peut donc tourner librement dans un sens ou dans l'autre autour du doigt 54, cette disposition permettant d'assurer la variation du pas des pales c'est-à-dire leur inclinaison relative mutuelle vis-à-vis du plan de la couronne 40 et 41 correspondante. Chacune des pales 48 à 51 est elle-même immobilisée sur l'extrémité du manchon 55 la recevant, qui présente à cet effet la forme d'une chape 61, le blocage final des pales étant réalisé au moyen d'écrou 62.

Afin de régler l'amplitude du débattement des pales vis-à-vis des couronnes pour faire varier leur inclinaison relative de la façon mentionnée ci-dessus, notamment pour assurer la variation de ce qu'il est connu d'appeler le pas « collectif » de la voilure, tout en autorisant également, en vol, une variation automatique et cyclique de ce pas, pour tenir compte des effets des turbulences créées par leur rotation et les mouvements de l'engin, on dispose conformément à une autre caractéristique importante de l'invention, sur la surface externe de chaque manchon 55 supportant une pale, deux extensions en forme d'oreilles 63 et 64, situées dans le prolongement diamétral l'une de l'autre pour former ensemble à l'extrémité de chaque pale une sorte de biellette de commande permettant de faire varier l'orientation de la pale autour du doigt 54 qui la supporte dans le plan de la couronne. A cet effet, les oreilles 63 et 64 comportent des trous d'attache 65 pour l'extrémité de cables, respectivement 66 et 67, guidés dans des gaines 68 dans une gorge 69 ménagée dans le bord de la couronne correspondante de telle manière que le câble 66 par exemple, fixé sur l'oreille 63 du manchon 55 supportant la pale 48 vienne s'attacher sur l'oreille 64 du manchon de la pale 49 disposée à l'opposé à la première, et vice versa pour le câble 67. Les cables 66 et 67 sont convenablement tendus par des ridoirs ou autres moyens analogues (non représentés) de telle sorte qu'un effort de traction sur l'un de ces câbles dans un sens provoque automatiquemnt un effort de traction sur l'autre mais dans le sens opposé, faisant ainsi pivoter la paire de pales 48, 49 ou 50, 51 correspondante, avec une même amplitude mais en sens inverse.

L'équipement de la nacelle se complète au moyen de divers accessoires dont le rôle tel qu'il sera explicité plus loin est de créer en combinaison avec l'effet de sustentation des ailes tournantes une composante d'avancement de l'engin. Notamment on a déjà précisé que la variation d'assiette de l'ensemble inclinant les pales dans une variation telle que l'effet de portance s'accompagne d'un effet de poussée notamment selon la direction du plan médian de la nacelle, peut être réalisée en faisant varier la position du siège coulissant 9 par un effet d'avance ou de recul créé par le pilote lui-même.

Afin de permettre en vol, les évolutions vers la droite ou vers la gauche de l'aéronef, on peut avantageusement disposer sur la nacelle 1, notamment fixée sur l'arrière de ses jambes d'appui 5, deux ailerons ou dérives 70, articulés chacun autour d'un axe 71 porté par une de ces jambes, la commande d'orientation de ces ailerons étant réalisée au moyen d'un manche 72 actionné par le pilote. Une barre de renvoi 73 est de préférence articulée sur les deux ailerons 70, disposés de chaque côté de la nacelle de part et d'autre de son plan médian, pour agir sur ces ailerons à la façon des côtés d'un parallélogramme déformable les deux ailerons 70 restant ainsi toujours parallèles quel que soit leur orientation relative par rapport au plan médian de l'appareil.

Dans l'exemple décrit jusqu'à présent, une fois l'engin soulevé du sol, on peut modifier simplement son assiette vis-à-vis de l'horizontale et créer ainsi une composante de poussée vers l'avant ou l'arrière, en modifiant la position du siège, selon un effort réglé par le pilote lui-même. Il en résulte en effet une inclinaison globale des ailes tournantes qui provoque, de façon classique, l'effet recherché.

Dans une autre variante de réalisation, on peut prévoir d'assurer également la composante de poussée à exercer sur l'appareil pour produire son déplacement, non plus en faisant varier l'assiette de l'ensemble par la modification de la position du siège du pilote, mais en adaptant sur la nacelle 1 une roue auxiliaire appropriée, dont la figure 5 illustre schématiquement la réalisation.

la paroi latérale 3 de la nacelle comporte ainsi de préférence sensiblement dans le plan médian de l'appareil, un support profilé 74 sur lequel peut librement tourner le moyeu 75 d'une roue 76. Cette dernière comporte une jante creuse 77 et un bandage périphérique 78, frottant sur les surfaces en regard des deux couronnes 40 et 41 ou de préférence même, coopérant par une liaison mécanique directe avec ces couronnes, en aménageant alors sur le bandage extérieur 78 des dents 78a coopérant avec des rainures (non référencées) prévues en regard dans les couronnes. La jante creuse 77 de la roue comporte quatre (ou plus) ailettes ou pales orientables 79, dont la commande d'orientation peut être notamment réalisée grâce à un pignon 80 solidaire de chaque ailette lui-même entraîné par un pignon conique 81 monté en bout d'un arbre d'actionnement 82, le cas échéant d'un poussoir.

Quelle que soit la variante utilisée pour la propulsion de l'appareil, l'appareil selon l'invention peut également comporter, comme illustré sur la figure 3, des moyens de commande, notamment électriques, fixés sur les couronnes 40 et 41 et permettant d'assurer à la demande un effort de traction déterminé sur les câbles 66 et 67, en faisant pivoter les pales associées aux deux couronnes d'entraînement, en particulier dans le but de faire varier l'inclinaison de ces pales et le pas collectif de l'appareil. A cet effet, chacune des couronnes peut comporter entre chaque paire de pales portées par celle-ci, un dispositif schématiquement représenté en 83 sur le dessin, constitué par exemple par un relais à deux positions commandant respectivement deux tiges 84 et 85 solidarisées des câbles 66 et 67 correspondants, afin de provoquer dans ces derniers un effort de déplacement dans une direction ou dans l'autre selon le sens de la double flèche 86. Chaque couronne 40 et 41 comporte un tel dispositif 83 dont la conception est telle qu'elle permet cependant, indépendamment de la commande électrique de déplacement des câbles de la façon ainsi précisée, le libre mouvement de ces derniers pour assurer la variation cyclique du pas, nécessaire au rattrapage automatique des effets des turbulences crées lors du fonctionnement de l'appareil.

Le pilote assis sur son siège a également à sa disposition une poignée latérale 87 pour la mise en route ou l'arrêt du moteur 19, une poignée 88 pour la commande des gaz du moteur et de préférence selon une autre caractéristique de l'invention un système permettant de créer entre les deux couronnes d'entraînement 40 et 41 un couple de déphasage relatif de l'une par rapport à l'autre pour assurer là également et en combinaison avec les ailerons 70 un effet de virage ou de lacet de l'appareil.

A cet effet, on monte sur chacune des couronnes, par exemple comme représenté sur la couronne 40, une languette de frein 89, fixée par un collier 90 sur le tube 2 de la nacelle disposée en regard de la couronne 40, cette languette 89 étant appliquée ou au contraire relachée du bord de la couronne contre laquelle elle frotte par un mécanisme à came, constitué ici d'un levier 92 articulé autour d'une axe 91 porté par le tube 2 et dont l'extrémité libre 93, en forme de bec, vient selon la position du levier, appuyer ou au contraire libérer la languette de frein 89. Un dispositif analogue est prévu sur la couronne 41 de telle sorte que, à volonté, puisse être modifié le couple relatif des ailes portées par les deux couronnes et provoquer selon le cas, le déplacement vers la gauche ou la droite de l'appareil.

Le fonctionnement de l'appareil décrit ci-dessus se déduit dès lors aisément des indications déjà exposées. La nacelle reposant par ses patins d'appui 6 sur le sol, le moteur 19 est mis en route par le pilote, préalablement assis et sanglé sur son siège 9, au moyen de la commande 87. Lorsque le régime du moteur réglé par la poignée 88 est approprié, l'embrayage centrifuge 29a assure la liaison mécanique nécessaire entre l'arbre de sortie du moteur 24 et l'arbre de transmission 36 qui entraîne la roue motrice 37. Cette dernière fait alors tourner en sens inverse mais avec la même vitesse, les couronnes 40 et 41 portant les pales 48 et 49 d'une part, 50 et 51 d'autre part des ailes tournantes. Préalablement, le pilote a ajusté le pas collectif de ces pales au moyen des câbles 66 et 67, en faisant pivoter d'un angle donné les manchons 55 portant celles-ci, afin de donner une orientation appropriée à leurs surfaces d'intrados et d'extrados.

Le régime du moteur s'accroissant, la vitesse des pales augmente jusqu'à ce que, grâce à leur mouvement contra-rotatif, la résultante verticale qu'elles créent permette à l'appareil de s'élever dans l'air grâce à une incidence convenable des pales, l'assiette de l'engin étant réglée par le pilote par coulissement de son siège de telle sorte que le centre de gravité de l'ensemble soit sensiblement placé selon l'axe vertical.

Une fois que l'appareil a atteint la hauteur souhaitée, le pilote peut alors commander le déplacement de l'engin vers l'avant ou l'arrière en faisant varier l'assiette pour incliner les pales consécutivement à un déplacement convenable de son siège et du centre de gravité de l'appareil. En variante, si l'appareil est pourvu d'une roue motrice auxiliaire, le pilote commande simplement l'orientation des ailettes 79 de cette roue pour produire la composante de poussée désirée. En vol, l'appareil peut naturellement subir des déplacements latéraux, en virage ou en lacet, grâce aux ailerons ou dérives 70 et/ou en agissant sur les languettes de frein 89, créant entre les deux couronnes 40 et 41 un couple de déphasage relatif, introduisant une composante de déplacement latéral appropriée.

Pendant les évolutions de l'appareil, le pas des pales est en permanence ajusté grâce à l'effet antagoniste des câbles 66 et 67 reliant à chaque fois les deux pales d'une même paire, avec correction automatique du pas, nécessitée par les effets des turbulences ou autres, qui agissent sur ces pales. Par ailleurs, en cas de défaillance du moteur 19, un détecteur (non représenté) permet de débrayer automatiquement l'embrayage centrifuge 27a le volant 34 permettant, par la roue libre 35, une autorotation des pales des ailes, autorisant une descente progressive immédiate de l'appareil jusqu'au sol.

On réalise ainsi un appareil à ailes tournantes de conception très simple dont, à titre purement indicatif, les caractéristiques suivantes peuvent être envisagées dans un exemple particulier de réalisation.

Encombrement

| Couronnes portes rotors : | |
|---|---|
| Diamètre intérieur | 100 cm |
| Diamètre extérieur | 120 cm |

| Réservoirs : | |
|---|---|
| Capacité unitaire | 101 |

| Pâles : | |
|---|---|
| Longueur | 200 cm |
| Largeur | 21 cm |

Poids

| Moteur | 28 kg |
|---|---|
| Couronnes porte rotors (X 2) | 16 kg |
| Nacelle | 28 kg |

| | |
|---|---|
| Roues avec transmission | 8 kg |
| Pales (x4) | 20 kg |
| Carburant (environ) | 20 kg |
| Utilisateur (inférieur ou égal à) | 90 kg |
| Total maximal en ordre de marche | 210 kg |

Une poussée minimale de 300 daN est ainsi suffisante pour le décollage vertical de l'appareil, d'où le choix d'une puisance du moteur d'environ 40 KWA.

L'appareil selon l'invention peut avoir de multiples applications, notamment pour des utilisations sportives, des missions d'observations ou de surveillance et d'une façon générale chaque fois que l'on désire utiliser un « ULM » (ultra léger motorisé) autorisant les évolutions d'un pilote dans un engin simple, léger et peu coûteux.

Bien entendu et comme déjà précisé, il va de soi que l'invention ne se limite pas aux exemples plus spécialement décrits et représentés. Notamment, on pourrait parfaitement envisager de réaliser l'appareil de telle sorte qu'il assure le transport de plusieurs personnes au lieu d'une seule.

**Revendications**

1. Aéronef à ailes tournantes, comportant, autour de l'emplacement de l'utilisateur, deux couronnes parallèles animées de mouvements de rotation identiques mais de sens inverse autour d'un axe commun, et supportant chacune au moins une paire de pales d'ailes ou voilures diamétralement opposées et disposées dans le prolongement l'une de l'autre, caractérisé en ce que ces deux couronnes rotatives (40, 41) sont portées par une nacelle (1) portant un siège (9) destiné à recevoir l'utilisateur en position assise de façon que celui-ci se trouve entouré par ces couronnes rotatives (40, 41), et ce siège est monté coulissant dans le plan médian et la nacelle (1), sensiblement dans le sens normal de déplacement en vol de l'appareil, et en ce qu'il est par ailleurs prévu des moyens (66-67) aptes à faire varier, dans chaque paire de pales, le pas de celles-ci de façon égale mais opposée pour chacune d'elles.

2. Aéronef selon la revendication 1, caractérisé en ce que la nacelle (1) comporte des moyens d'appui au sol (5-6-7), assurant au repos la stabilité de l'appareil.

3. Aéronef selon la revendication 2, caractérisé en ce que les moyens d'appui au sol sont constitués par une structure de support rigide (5-7), prolongeant la nacelle et comportant des patins (6), roulettes ou analogues.

4. Aéronef selon la revendication 1, caractérisé en ce que les moyens d'entraînement des couronnes (40-41) comportent au moins une roue motrice (37), entraînée en rotation autour d'un axe (36) parallèle au plan des couronnes, supporté par la nacelle (1) et disposé à égale distance de l'une et de l'autre, la périphérie de la roue (37) portant contre la face en regard de chaque couronne de telle sorte que la rotation de cette roue entraîne, à la même vitesse mais en sens inverse, l'une et l'autre des deux couronnes parallèles (40-41).

5. Aéronof selon la revendication 4, caractérisé en ce que la roue motrice (37) comporte un pneumatique de roulement (39) réalisé en caoutchouc et assure l'entraînement des couronnes (40-41) par friction sur ces dernières.

6. Aéronef selon l'une des revendications 4 ou 5, caractérisé en ce que l'axe (36) de la roue motrice (37) traverse librement un bloc de support (27) solidarisé de la nacelle et est relié par l'intermédiaire d'un mécanisme à roue libre (35), à un volant (34) sur lequel passe une courroie d'entraînement (33), actionnée par une poulie (32) elle-même entraînée, à travers un embrayage centrifuge (27a), par l'arbre de sortie (24) d'un moteur à explosion (19).

7. Aéronef selon la revendication 6, caractérisé en ce que la liaison entre le moteur à explosion (19) et l'embrayage centrifuge (27a) est réalisé par un joint élastique (25), apte à tolérer de légers désalignements entre l'arbre de sortie de ce moteur et l'embrayage.

8. Aéronef selon l'une quelconque des revendications 6 ou 7, caractérisé en ce que le moteur à explosion (19) est porté par la nacelle (1) au moyen de colliers (20) ou analogues d'attache et d'écrous de blocage (21), permettant d'ajuster au montage sa position relative sur la nacelle.

9. Aéronef selon la revendication 4, caractérisé en ce que la roue motrice (37) est constituée par une roue dentée en prise, à la fois d'un engrenage, avec une piste crantée souple prévue sur chacune des faces en regard des deux couronnes entraînées par cette roue.

10. Aéronef selon l'une quelconque des revendications 1 à 9, caractérisé en ce que chaque couronne (40-41) est portée par la nacelle (1) au moyen d'une pluralité de jeu de galets (43 à 45), répartis circonférentiellement autour de cette couronne, chaque jeu comportant trois galets montés rotatifs autour d'axes fixés à la nacelle et appliqués pour deux d'entre eux (43-44) respectivement sur l'une et l'autre des faces de la couronne d'une part et pour le troisième (45) contre le bord intérieur de celle-ci opposé aux pales (48 à 50) d'autre part.

11. Aéronef selon l'une quelconque des revendications 1 à 10, caractérisé en ce que chaque couronne (40-41) comporte, au droit de chaque pale (48 à 50), un doigt axial (54) de support de celle-ci, muni d'une butée à aiguilles (58) et sur lequel est engagé un manchon d(55) propre à pivoter autour du doigt, ce manchon étant prolongé par une chape (61) entre les deux bras de laquelle est montée et fixée l'extrémité de la pale de manière à autoriser, par rotation relative du manchon, la variation du pas de la pale vis-à-vis de la couronne.

12. Aéronef selon la revendication 11, caractérisé en ce que chaque pale de la voilure comporte deux extensions (63-64) transversales disposées dans le prolongement l'une de l'autre, les pales d'une même paire (48-49, 50-51) étant réunies, autour de la nacelle, par deux câbles croisés tendus (66, 67), fixés en bout de ces extensions respectivement aux extrémités opposées de celles-ci, de telle sorte qu'un effort de traction dans un sens sur un des câbles se traduise par un effort de traction inverse sur l'autre câble et vice-versa, les deux pales de la même paire pivotant ainsi autour de leurs doigts axiaux de support avec une amplitude de rotation égale et opposée.

13. Aéronef selon la revendication 12, caractérisé en ce que la tension des câbles (66-67) assurant le pivotement relatif des pales est ajustée par un ensemble de ridoirs ou tendeurs analogues, associés aux extensions (63-64) de support.

14. Aéronef selon l'une des revendications 12 ou 13, la commande de position des deux câbles croisés (66-67) déterminant le pas des pales est réalisée au moyen de dispositifs électromagnétiques (83) à deux positions ou par l'intermédiaire d'un moteur pas à pas ou d'un motoréducteur, assurant l'entraînement mutuel en sens inverse de ces câbles.

15. Aéronef selon l'une quelconque des revendications 1 à 14, caractérisé en ce que la nacelle (1) porte, à l'opposé de la roue motrice d'entraînement (34) des couronnes, une roue auxiliaire (76) librement entraînée par le mouvement de ces couronnes (40-41), l'axe de la roue auxiliaire étant disposé dans le plan médian de la nacelle à l'opposé de celui de la roue motrice (37), la roue auxiliaire (76) comportant un jeu d'ailettes radiales (79) orientables, propres à créer une composante d'avancement de l'aéronef selon la direction de ce plan médian.

16. Aéronef selon l'une quelconque des revendications 1 à 15, caractérisé en ce que le siège (9) de l'utilisateur est monté coulissant sur au moins une barre de support (4), disposée sensiblement au voisinage de la couronne inférieure (41) et s'étendant parallèlement au plan médian, la position du siège étant ajustée par l'utilisateur par la réaction d'un effort exercé par celui-ci sur des cale-pieds (4a) ou appuis analogues disposés sur la nacelle de part et d'autre de ce plan et éventuellement sur un guidon.

17. Aéronef selon la revendication 16, caractérisé en ce que le siège coulissant comporte un contre-poids d'équilibrage (15), afin de compenser le poids d'un utilisateur trop léger.

18. Aéronef selon l'une quelconque des revendications 1 à 17, caractérisé en ce que la nacelle (1) supporte au moins un et de préférence deux réservoirs de carburant (16) disposés entre les couronnes (40-41) de part et d'autre du plan médian de la nacelle.

19. Aéronef selon l'une quelconque des revendications 1 à 18, caractérisé en ce que le siège coulissant (9) comporte un dossier (14) dans l'épaisseur duquel est placé un réservoir principal ou complémentaire de carburant.

20. Aéronef selon l'une quelconque des revendications 1 à 19, caractérisé en ce que la nacelle (1) supporte de part et d'autre du plan médian des dérives ou ailerons latéraux (70), orientables, de manière à faciliter les évolutions latérales de l'aéronef.

21. Aéronef selon l'une quelconque des revendications 1 à 20, caractérisé en ce que la nacelle est munie d'organes de commande du moteur, des ailerons et des câbles de réglage du pas des pales, ainsi que des moyens permettant d'assurer les évolutions en vol de l'appareil.

22. Aéronef selon l'une quelconque des revendications 1 à 21, caractérisé en ce que chacune des deux couronnes (40-41) portées par la nacelle, comporte au moins un frein (89) propre à être actionné par l'utilisateur pour ralentir cette couronne dans sa rotation et créer un couple de décalage entre les deux couronnes, en provoquant une réaction sur l'aéronef, notamment pour produire le déplacement en virage de celui-ci.

23. Aéronef selon l'une quelconque des revendications 6 à 22, caractérisé par un moyen de détection de l'arrêt du moteur de manière à commander le débrayage automatique de ce dernier et la mise en autorotation immédiate des pales des ailes portées par les couronnes.

## Claims

1. Rotary-wing aircraft having two parallel rings around the user's location, said rings being driven in identical movements of rotation but in opposite directions about a common axis and the function of each ring being to support at least one pair of wing blades or airfoils which are diametrically opposite and located in the line of extension of each other, characterized in that said two rotating rings (40, 41) are carried by a nacelle (1) which carries a seat (9) for accommodating the user in the seated position so that the latter is surrounded by said rotating rings (40, 41) and said seat is mounted for sliding motion in the median plane of the nacelle (1) substantially in the normal direction of motion of the aircraft in flight, and that provision is made in addition for means (66-67) whereby the blade pitch in each pair of blades can be varied in an equal but opposite manner in each case.

2. Aircraft in accordance with claim 1, characterized in that the nacelle (1) is provided with means (5-6-7) for supporting the aircraft on the ground, thus ensuring stability of the aircraft when at rest.

3. Aircraft in accordance with claim 2, characterized in that the means for supporting the aircraft on the ground are constituted by a rigid support structure (5-7) forming an extension of the nacelle and provided with skids (6), small wheels or the like.

4. Aircraft in accordance with claim 1, characterized in that the means for driving the rings (40-41) include at least one driving wheel (37) which is driven in rotation about a shaft (36) parallel to the plane of the rings, said shaft being supported by the nacelle (1) and located at equal distance from both rings, the periphery of the wheel (37) being applied against the opposite face of each ring in such a manner as to ensure that the rotation of said wheel actuates both parallel rings (40-41) at the same speed but in opposite directions.

5. Aircraft in accordance with claim 4, characterized in that the driving wheel (37) is provided with a rolling-drive type (39) formed of rubber and having the function of driving the rings (40-41) by frictional contact with these latter.

6. Aircraft in accordance with one of claims 4 or 5, characterized in that the shaft (36) of the driving wheel (37) passes freely through a carrier block (27) rigidly fixed to the nacelle and is coupled by means of a free-wheel mechanism (35) to a flywheel (34) over which is passed a driving-belt (33) actuated by a pulley (32) which is in turn driven through a centrifugal clutch (27a) by the output shaft (24) of an internal combustion engine (19).

7. Aircraft in accordance with claim 6, characterized in that the connection between the internal combustion engine (19) and the centrifugal clutch (27a) is established by means of a resilient coupling (25) which is capable of permitting slight misalignments between the output shaft of said engine and the clutch.

8. Aircraft in accordance with either of claims 6 or 7, characterized in that the internal combustion engine (19) is carried by the nacelle (1) by means of fastening collars (20) or the like and locking nuts (21) which make it possible to adjust its relative position on the nacelle at the time of assembly.

9. Aircraft in accordance with claim 4, characterized in that the driving wheel (37) is constituted by a toothed wheel engaged in the same manner as a gear-wheel with a flexible slotted track provided on each opposite face of the two rings which are driven by said wheel.

10. Aircraft in accordance with any one of claims 1 to 9, characterized in that each ring (40-41) is carried by the nacelle (1) by means of a plurality of sets of runner-wheels (43 to 45) located in circumferentially spaced relation around said ring, each set being constituted by three runner-wheels rotatably mounted on axle-pins attached to the nacelle and applied on the one hand in the case of two runner-wheels (43-44) respectively against both faces of the ring and on the other hand in the case of the third runner-wheel (45) against the internal edge of this latter which is opposite to the blades (48 to 50).

11. Aircraft in accordance with any one of claims 1 to 10, characterized in that each ring (40-41) is provided opposite to each blade (48 to 50) with an axial stud (54) which supports this latter, which is fitted with a needle thrust-bearing (58) and on which is engaged a sleeve (55) so designed as to be capable of pivoting about the stud, said sleeve being provided with an extension in the form of a stirrup-piece (61), the end of the blade being mounted and fixed between the two arms of said stirrup-piece so as to permit a variation in pitch of the blade with respect to the ring by relative rotation of the sleeve.

12. Aircraft in accordance with claim 11, characterized in that each blade of the airfoil has two transverse extensions (63-64) located in alignment with each other, the blades of one and the same pair (48-49, 50-51) being joined together around the nacelle by means of two crossed and tensioned cables (66, 67) fixed at the end of said extensions respectively at the opposite extremities thereof so that a tractive force exerted in one direction on one of the cables results in an opposite tractive force on the other cable and conversely, the two blades of the same pair being thus capable of pivoting about their axial supporting studes with an equal and opposite amplitude of rotation.

13. Aircraft in accordance with claim 12, characterized in that the tension applied to the cables (66-67) for ensuring relative pivotal displacement of the blades is adjusted by means of an assembly of distance-bars or similar tensioning devices associated with the support extensions (63-64).

14. Aircraft according to one of claims 12 or 13, the position of the two crossed cables (66-67) for determining the pitch of the blades being controlled by means of electromagnetic devices (83) having two positions or by means of a stepping motor or of a reduction-gear motor for ensuring relative displacement of these cables in opposite directions.

15. Aircraft in accordance with any one of claims 1 to 14, characterized in that the nacelle (1) carries at the end opposite to the ring-displacement driving wheel (34) an auxiliary wheel (76) which is freely driven by the movement of said rings (40-41), the axis of the auxiliary wheel being located in the median plane of the nacelle opposite to that of the driving wheel (37), the auxiliary wheel (76) being provided with a set of orientable radial vanes (79) adapted to generate a forward aircraft-flight component in the direction of said median plane.

16. Aircraft in accordance with any one of claims 1 to 15, characterized in that the user's seat (9) is slidably mounted on at least one supporting bar (4) located substantially in the vicinity of the lower ring (41) and extending parallel to the median plane, the position of the seat being adjusted by the user by means of the reaction of an effort exerted by him on toe-clips (4a) or similar foot-rests arranged on the nacelle on each side of said plane and if necessary on a handlebar.

17. Aircraft in accordance with claim 16, characterized in that the sliding seat is provided with a balancing counterweight (15) in order to compensate for the inadequate weight of a user.

18. Aircraft in accordance with any one of claims 1 to 17, characterized in that the nacelle (1) supports at least one and preferably two fuel tanks (16) placed between the rings (40-41) on each side of the median plane of the nacelle.

19. Aircraft in accordance with any one of claims 1 to 18, characterized in that the sliding seat (9) is provided with a seat-back (14) in which a main fuel tank or complementary fuel tank is placed within the thickness of the seat-back.

20. Aircraft in accordance with any one of claims 1 to 19, characterized in that the nacelle (1) supports orientable lateral fins or ailerons (70) on each side of the median plane so as to facilitate lateral movements of the aircraft.

21. Aircraft in accordance with any one of claims 1 to 20, characterized in that the nacelle is provided with devides for controlling the engine, ailerons and cables for adjusting the pitch of the blades as well as means for directing the movements of the aircraft in flight.

22. Aircraft in accordance with any one of claims 1 to 21, characterized in that each of the two rings (40-41) carried by the nacelle is provided with at least one brake (89) adapted to be actuated by the user for slowing-down the rotational motion of said ring and generating a relative-displacement torque between the two rings and inducing a reaction on the aircraft, in particular in order to produce a banking displacement of this latter.

23. Aircraft in accordance with any one of claims 6 to 22, characterized by a means for detecting engine failure so as to initiate automatic declutching of the engine and immediate autorotation of the wing blades carried by the rings.


**Patentansprüche**

1. Drehflügel-Luftfahrzeug mit zwei um den Platz des Benutzers angeordneten parallelen Drehkränzen, die mit identischen, jedoch gegenläufigen Drehbewegungen um eine gemeinsame Achse beaufschlagbar sind und jeweils wenigstens ein Paar Flügelblätter oder Tragwerke tragen, die einander diametral gegenüberliegen und in gegenseitiger Verlängerung angeordnet sind, dadurch gekennzeichnet, daß die beiden Drehkränze (40-41) von einer Gondel (1) getragen sind, in der ein Sitz (9) für die Aufnahme des Benutzers in sitzender Position derart angeordnet ist, daß der Benutzer von den Drehkränzen (40-41) umgeben ist, daß der Sitz in der Medianebene der Gondel (1) etwa in der normalen Flugbewegungsrichtung des Geräts gleitbar montiert ist, und daß Mittel (66-67) vorgesehen sind, durch die die Steigung jedes Paares von Flügelblättern in gleichem Ausmaß jedoch mit entgegengesetztem Richtungssinn für jedes von ihnen veränderbar ist.

2. Luftfahrzeug, nach Anspruch 1, dadurch gekennzeichnet, daß die Gondel (1) Mittel (5-6-7) zum Abstützen auf dem Boden aufweist, die im Ruhezustand die Stabiltät des Geräts gewährleisten.

3. Luftfahrzeug nach Anspruch 2, dadurch gekennzeichnet, daß die Mittel zum Abstützen auf dem Boden aus einer starren Tragkonstruktion (5-7) bestehen, die in Verlägerung der Gondel angeordnet und mit Kufen, Rollen oder dgl. ausgestattet sind.

4. Luftfahrzeug nach Anspruch 1, dadurch gekennzeichnet, daß die Mittel für den Antrieb der Drehkränze (40-41) wenigstens ein Antriebsrad (37) umfassen, das mit einer Drehbewegung um eine Ebene der Drehkränze parallele, von der Gondel (1) getragene Achse (36) beaufschlagbar ist, die von jedem der beiden Drehkränze gleichen Abstand hat, und daß das Antriebsrad mit seinem Umfang derart an den einander zugekehrten Seiten der beiden Drehkränze anliegt, daß die Drehung des Antriebsrades die beiden parallelen Drehkränze (40, 41) mit gleicher Geschwindigkeit, jedoch entgegengesetztem Richtungssinn antreibt.

5. Luftfahrzeug nach Anspruch 4, dadurch gekennzeichnet, daß das Antriebsrad (37) einen aus Kautschuk bestehen Luftreifen (39) besitzt, der den Antrieb der Drehkränze (40-41) durch Reibung an diesen ermöglicht.

6. Luftfahrzeug nach einem der Ansprüche 4 oder 5, dadurch gekennzeichnet, daß die Achse (36) des Antriebsrades (37) einen mit der Gondel fest verbundenen Lagerblock (27) frei durchdringt und über einen Freilaufmechanismus (35) mit einer Scheibe (34) verbunden ist, über die ein Treibriemen (33) verläuft, der von einer Riemenscheibe (32) angetrieben wird, die ihrerseits über eine Fliehkraftkupplung (27a) von der Ausgangswelle (24) eines Brennkraftmotors (19) angetrieben wird.

7. Luftfahrzeug nach Anspruch 6, dadurch gekennzeichnet, daß die Verbindung zwischen dem Brennkraftmotor (19) und der Fliehkraftkupplung (27a) über eine elastische Kupplung erfolgt, die geringfügige Fluchtungsfehler zwischen der Ausgangswelle des Brennkraftmotors und der Fliehkraftkupplung ausgleichen kann.

8. Luftfahrzeug nach einem der Ansprüche 6 oder 7, dadurch gekennzeichnet, daß der Brennkraftmotor (19) durch Ringflansche (20) oder ähnliche Befestigungsmittel sowie durch Blockiermuttern (21), die bei der Montage eine Einstellung seiner Position relativ zu der Gondel ermöglichen, an dicser befestigt ist.

9. Luftfahrzeug nach Anspruch 4, dadurch gekennzeichnet, daß das Antriebsrad (37) aus einem Zahnrad besteht, das nach Art eines Zahngetriebes mit nachgiebigen, gerippten Laufbahnen in Eingriff steht, die auf den einander zugewandten Seiten der beiden von dem Antriebsrad angetriebenen Drehkränze ausgebildet sind.

10. Luftfahrzeug nach einem der Ansprüche 1 bis 9, dadurch gekennzeichnet, daß jeder Drehkranz (40-41) mit Hilfe mehrerer über seinen Umfang verteilten Rollensätze (43 bis 45) an der Gondel (1) gehalten ist, wobei jeder Rollensatz drei Rollen aufweist, die um an der Gondel befestigte Achsen drehbar sind und von denen zwei (43-44) an der einen bzw. der anderen Fläche des jeweiligen Drehkranzes angreifen, während die dritte (45) an dem von den Flügelblättern (48 bis 50) abgewandten Innenrand des Drehkranzes angreift.

11. Luftfahrzeug nach einem der Ansprüche 1 bis 10, dadurch gekennzeichnet, daß jeder Drehkranz (40-41) an der Stelle jedes Flügelblatts (48 bis 50) einen mit einem Nadellager (58) ausgestatteten axialen Lagerfinger (54) zur Lagerung des betreffenden Flügelblatts aufweist, auf dem eine um den Lagerfinger verschwenkbare Buchse (55) angebracht ist, die sich in einer Gabel (61) verlängert, zwischen deren beiden Schenkeln das Ende des Flügelblatts derart montiert und befestigt ist, daß die Steigung des Flügelblatts gegenüber dem Drehkranz durch relative Drehung der Buchse veränderbar ist.

12. Luftfahrzeug nach Anspruch 11, dadurch gekennzeichnet, daß jedes Flügelblatt des Tragwerks zwei transversale Ansätze (63-64) hat, die in gegenseitiger Verlängerung angeordnet sind, daß die Flügelblätter eines Paares (48-49, 50-51) um die Gondel herum durch zwei gekreuzte, gespannte Kabel (66, 67) miteinander verbunden sind, die jeweils an den entgegengesetzten Enden der Ansätze befestigt sind, derart daß eine in einer Richtung auf eines der Kabel wirkende Zugkraft sich in eine entgegengesetzte Zugkraft auf das andere Kabel umsetzt und umgekehrt und die beiden Flügelblätter ein und desselben Paares so um ihre axialen Lagerfinger mit einer Drehamplitude gleicher Größe und entgegengesetzter Richtung verschwenkt werden.

13. Luftfahrzeug nach Anspruch 12, dadurch gekennzeichnet, daß die Spannung der Kabel (66-67), die die relative Verschwenkung der Flügelblätter bewirkt, durch einen Satz von Spannern oder ähnlicher Mittel eingestellt wird, die den genannten Ansätzen (63-64) zugeordnet sind.

14. Luftfahrzeug nach Anspruch 12 oder 13, dadurch gekennzeichnet, daß die Steuerung der Position der beiden gekreuzten Kabel (66-67), die die Steigung der Flügelblätter bestimmt, durch elektromagnetische Vorrichtungen (83) mit zwei Positionen oder durch einen Schrittmotor oder einen Getriebemotor erfolgt, die den gegenseitigen Antrieb der Kabel mit entgegengesetztem Richtungssinn gewährleisten.

15. Luftfahrzeug nach einem der Ansprüche 1 bis 4, dadurch gekennzeichnet, daß die Gondel (1) auf der dem Antriebsrad (34) für die Drehkränze gegenüberliegenden Seite ein zusätzliches Rad (76) trägt, das durch die Bewegung der Drehkränze (40-41) angetrieben wird und dessen Achse in der Medianebene der Gondel auf der dem Antriebsrad (34) entgegengesetzten Seite liegt, und daß das zusätzliche Rad (76) einen Satz verstellbarer radialer Flügel (79) aufweist, die dem Luftfahrzeug eine Vortriebskomponente in Richtung dieser Medianebene verleihen können.

16. Luftfahrzeug nach einem der Ansprüche 1 bis 15, dadurch gekennzeichnet, daß der Sitz (9) des Benutzers auf wenigstens einem Lagerstab (4) gleitbar montiert ist, der etwa in der Nähe des unteren Drehkranzes (41) angeordnet ist und parallel zu der Medianebene verläuft, wobei die Position des Sitzes von dem Benutzer durch die Gegenwirkung einer von ihm auf zu beiden Seiten der Medianebene an der Gondel angeordnete Fußkeile oder ähnliche Abstützungen oder gegebenenfalls auf einen Steuergriff ausgeübte Kraft eingestellt wird.

17. Luftfahrzeug nach Anspruch 16, dadurch gekennzeichnet, daß der gleitbare Sitz ein Ausgleichsgewicht (15) zur Kompensation des Gewicht eines zu leichten Benutzers aufweist.

18. Luftfahrzeug nach einem der Ansprüche 1 bis 17, dadurch gekennzeichnet, daß die Gondel (1) wenigstens einen, vorzugsweise zwei Kraftstoffbehälter (16) trägt, die zwischen den Drehkränzen (40-41) zu beiden Seiten der Medianebene der Gondel angeordnet sind.

19. Luftfahrzeug nach einem der Ansprüche 1 bis 18, dadurch gekennzeichnet, daß der gleitbare Sitz (9) eine Rückenlehne (14) aufweist, in dessen Dickenausdehnung ein Haupt- oder Zusatz-Kraftstoffbehälter angeordnet ist.

20. Luftfahrzeug nach einem der Ansprüche 1 bis 19, dadurch gekennzeichnet, daß die Gondel (1) zu beiden Seiten der Medianebene Seitenleitwerke oder Querruder (70) trägt, die zur Erleichterung der seitlichen Bewegungen des Luftfahrzeugs verstellbar sind.

21. Luftfahrzeug nach einem der Ansprüche 1 bis 20, dadurch gekennzeichnet, daß die Gondel Steuerorgane zur Steuerung des Motors, der Seitenleitwerke und der Kabel zur Regelung der Steigung der Flügelblätter sowie Mittel aufweist, die es ermöglichen, die Bewegungen des Geräts im Flug zu gewährleisten.

22. Luftfahrzeug nach einem der Ansprüche 1 bis 21, dadurch gekennzeichnet, daß jeder der beiden von der Gondel getragenen Drehkränze (40-41) wenigstens eine Bremse (89) aufweist, die von dem Benutzer betätigbar ist, um die Drehbewegung des betreffenden Drehkranzes zu verlangsamen und zwischen den beiden Drehkränzen ein Verschiebungsmoment zu erzeugen und damit, insbesondere zu Zwecke der Kurvenfahrt, eine Gegenwirkung auf das Luftfahrzeug hervorzurufen.

23. Luftfahrzeug nach einem der Ansprüche 6 bis 22, gekennzeichnet durch eine Einrichtung zur Erfassung des Motorstillstands, die ein automatisches Abkuppeln bewirkt und veranlaßt, daß die von den Drehkränzen getragenen Flügelblätter unverzüglich in Selbstdrehung versetzt werden.

FIG. 1

FIG. 2

FIG. 6

FIG. 3

EP 0 238 588 B1

FIG. 4

FIG. 5